# EUROPÄISCHE PATENTSCHRIFT

(11) **EP 3 679 563 B1**
(45) Veröffentlichungstag und Bekanntmachung des Hinweises auf die Patenterteilung: **12.10.2022**
(21) Anmeldenummer: 18753373.2
(22) Anmeldetag: 08.08.2018
(51) Int. Cl.: G08G 1/16

(54) **VERFAHREN UND VORRICHTUNG ZUR KOLLISIONSERKENNUNG FÜR EIN FAHRZEUG**
METHOD AND DEVICE FOR DETECTING COLLISIONS FOR A VEHICLE
PROCÉDÉ ET DISPOSITIF DE DÉTECTION DE COLLISION POUR UN VÉHICULE

(30) Priorität: 05.09.2017 DE 102017215519
(43) Veröffentlichungstag der Anmeldung: 15.07.2020
(73) Patentinhaber: Robert Bosch GmbH, 70442 Stuttgart (DE)
(72) Erfinder: BANZHAF, Holger Andreas, 89150 Laichingen (DE)
(86) Internationale Anmeldenummer: PCT/EP2018/071508
(87) Internationale Veröffentlichungsnummer: WO 2019/048169

(56) Entgegenhaltungen:
- DE-A1-102007 055 389
- GB-A- 2 486 814
- US-A1- 2012 296 523

## Beschreibung

### Stand der Technik

Die vorliegende Erfindung betrifft ein Verfahren und eine Vorrichtung zur Kollisionserkennung für ein Fahrzeug. Ein Manövrieren von Fahrzeugen in engen Szenarien spielt vor allem beim Parken von Fahrzeugen eine wichtige Rolle. Die Schwierigkeit liegt zunächst darin, einen kollisionsfreien Bewegungspfad mit möglichst wenigen Richtungswechseln und geringen Krümmungsänderungen über den Verlauf des Bewegungspfades zu generieren. Dazu werden zumeist geometrische Verfahren genutzt.

In naher Zukunft werden automatisierte Fahrzeuge hochverdichtet geparkt, d.h., die Fahrzeuge werden enger geparkt und evtl. so geparkt, dass Verschiebeoperationen notwendig sind, um ein weiteres Fahrzeug auszuparken. Daraus entstehen hoch nichtkonvexe Zustandsräume, in denen für das Manövrieren des Fahrzeuges ein Bewegungspfad gefunden werden muss. Außerdem muss in solchen Szenarien mit der exakten Kontur des Fahrzeuges geplant werden und es kann nicht lediglich auf rechteckige Bounding-Boxes oder Kreise auf der Kontur zurückgegriffen werden, damit ein Bewegungspfad überhaupt gefunden werden kann und dieser eine ausreichende Güte mit wenigen Richtungswechseln aufweist.

Ein möglicher Ansatz zur Lösung dieses Pfad-Planungsproblems sind Rapidly-Exploring-Random-Trees, im Folgenden als "RRT" bezeichnet. Ein RRT generiert zufällig zwei Konfigurationen im Zustandsraum und verbindet diese exakt mit einer sog. "Steering Function". Ist der verbundene Pfad kollisionsfrei, wird dieser zu einem Baum (Graph) hinzugefügt. Dadurch muss der Zustandsraum nicht diskretisiert werden und es wird probabilistisch zur optimalen Lösung konvergiert, falls eine existiert. Ein solcher RRT verbringt ca. 90% seiner Rechenzeit mit der Ausführung von Kollisionsprüfungen. Daher ist es besonders wichtig, eine möglichst effiziente und schnelle Kollisionserkennung bereitzustellen.

Die US2012/296523A1 offenbart ein Verfahren gemäß dem Oberbegriff des Anspruchs 1. Weitere Verfahren zur Kollisionserkennung für ein Fahrzeug sind aus der DE102007055389A1 und der GB2486814A bekannt.

### Offenbarung der Erfindung

Das erfindungsgemäße Verfahren zur Kollisionserkennung für ein Fahrzeug umfasst ein Ausführen einer ersten Kollisionsprüfung, wobei geprüft wird, ob ein Objekt aus einer Umgebung des Fahrzeuges innerhalb einer einhüllenden Fläche liegt, wobei die einhüllende Fläche sich entlang eines Abschnittes einer Bewegungsbahn des Fahrzeuges erstreckt, wobei die einhüllende Fläche eine vorgegebene erste geometrischen Form aufweist, welche so gewählt wird, dass das Fahrzeug bei einem Befahren des Abschnittes der Bewegungsbahn innerhalb der einhüllenden Fläche bleibt, ein Ausführen einer zweiten Kollisionsprüfung, falls bei der ersten Kollisionsprüfung festgestellt wurde, dass ein Objekt aus der Umgebung des Fahrzeuges innerhalb der einhüllenden Fläche liegt, wobei bei der zweiten Kollisionsprüfung geprüft wird, ob ein Objekt in einer der einhüllenden Fläche zugehörigen Teilfläche liegt, welche einen Teilbereich der einhüllenden Fläche definiert und eine vorgegebene zweite geometrische Form aufweist, welche so gewählt und innerhalb der einhüllenden Fläche angeordnet ist, dass jeder Punkt der Teilfläche von dem Fahrzeug bei einem Befahren des Abschnittes der Bewegungsbahn überstrichen wird, und ein Ausführen einer dritten Kollisionsprüfung, falls bei der zweiten Kollisionsprüfung festgestellt wurde, dass kein Objekt aus der Umgebung des Fahrzeuges innerhalb der Teilfläche liegt, wobei geprüft wird, ob ein Objekt auf solchen Punkten innerhalb der einhüllenden Fläche liegt, welche von dem Fahrzeug bei einem Befahren des Abschnittes der Bewegungsbahn überstrichen werden.

Die Vorrichtung zur Kollisionserkennung für ein Fahrzeug ist dazu eingerichtet, das erfindungsgemäße Verfahren auszuführen.

Eine Bewegungsbahn ist dabei ein von einem Planungsalgorithmus bereitgestellter Bewegungspfad. Dabei ist die Bewegungsbahn bevorzugt eine mögliche Bewegungsbahn aus einer Vielzahl von Bewegungsbahnen, wobei eine Bewegungsbahn als finale Bewegungsbahn ausgewählt wird, wenn bei der Kollisionserkennung festgestellt wurde, dass auf dieser Bewegungsbahn keine Kollision zwischen dem Fahrzeug und einem Objekt erfolgt. Die Bewegungsbahn ist in einzelne Abschnitte unterteilt oder umfasst lediglich einen einzigen Abschnitt. Umfasst die Bewegungsbahn mehrere Abschnitte, so wird die Bewegungsbahn insbesondere abschnittsweise betrachtet.

Bei dem Ausführen der ersten Kollisionsprüfung wird geprüft, ob ein Objekt aus der Umgebung des Fahrzeuges innerhalb einer einhüllenden Fläche liegt. Es erfolgt somit bei der ersten Kollisionsprüfung eine grobe Abschätzung, ob eine Kollision zwischen dem Fahrzeug und einem Objekt wahrscheinlich ist. Die erste geometrische Form ist dabei insbesondere eine solche Form, welche unabhängig von einer äußeren Kontur des Fahrzeuges gewählt ist. Die einhüllende Fläche ist dabei so gewählt, dass innerhalb der einhüllenden Fläche sowohl Punkte liegen, welche von dem Fahrzeug bei einem Befahren des Abschnittes überstrichen werden, als auch solche Punkte liegen, bei denen es zu keiner Kollision zwischen dem Fahrzeug und einem Objekt kommen würde, wenn das Objekt sich auf einem dieser Punkte befinden würde. Die erste geometrische Form ist dabei bevorzugt einer Bahnform des Abschnittes der Bewegungsbahn des Fahrzeuges zugeordnet. Die einhüllende Fläche erstreckt sich entlang des Abschnittes der Bewegungsbahn des Fahrzeuges. Das bedeutet, dass die Anordnung der einhüllenden Fläche von der Bewegungsbahn bzw. dem Abschnitt der Bewegungsbahn abhängig ist.

Typischerweise wird das erfindungsgemäße Verfahren zur Kollisionserkennung mittels eines geometrischen Modells ausgeführt. Das bedeutet, dass die einhüllenden Flächen, die Bewegungsbahn und die Teilbereiche lediglich als mathematische Konstrukte beschrieben werden. Dabei wird eine Anordnung der einhüllenden Fläche, der Bewegungsbahn und der Teilfläche in Bezug zu einer tatsächlichen Umgebung eines Fahrzeugs umgesetzt, um die Bewegungsbahn in dieser tatsächlichen Umgebung zu planen.

Es erfolgt zudem eine zweite Kollisionsprüfung, falls bei der ersten Kollisionsprüfung festgestellt wurde, dass ein Objekt aus der Umgebung des Fahrzeuges innerhalb der einhüllenden Fläche liegt. Das Ausführen der zweiten Kollisionsprüfung erfolgt in Reaktion auf ein Ergebnis aus der ersten Kollisionsprüfung. Falls bei der ersten Kollisionsprüfung festgestellt wurde, dass kein Objekt aus der Umgebung des Fahrzeuges innerhalb der einhüllenden Fläche liegt, kann das Ausführen der zweiten Kollisionsprüfung das Ausführen der dritten Kollisionsprüfung übersprungen werden, da eine Kollision zwischen dem Fahrzeug und einem Objekt bereits zu diesem Zeitpunkt ausgeschlossen werden kann. Bei der zweiten Kollisionsprüfung wird geprüft, ob ein Objekt in einem solchen Bereich der einhüllenden Fläche liegt, welcher sicher von dem Fahrzeug überstrichen wird, bei dem es also sicher zu einer Kollision zwischen dem Fahrzeug und dem Objekt kommen würde. Die Teilfläche ist dabei so gewählt, dass diese eine zweite geometrische Form aufweist. Die zweite vorgegebene geometrische Form ist dabei unabhängig von einer Kontur des Fahrzeuges. Ferner ist eine Fläche der Teilfläche geringer als die Fläche des Bereiches, welcher von dem Fahrzeug bei dem Befahren des Abschnittes der Bewegungsbahn überstrichen wird. Es wird somit bei der zweiten Kollisionsprüfung in einer Annäherung abgeschätzt, ob es sicher zu einer Kollision zwischen dem Fahrzeug und einem Objekt kommt, wenn der Abschnitt von dem Fahrzeug befahren wird. Dabei besteht jedoch weiterhin die Option, dass es auch dann zu einer Kollision kommt, wenn bei der zweiten Kollisionsprüfung festgestellt wird, dass kein Objekt innerhalb der Teilfläche liegt. Mit der Bezeichnung, dass ein Bereich von dem Fahrzeug überstrichen wird, ist gemeint, dass irgendein Punkt des Fahrzeuges sich bei dem Bewegen entlang des Abschnittes der Bewegungsbahn zu irgendeinem Zeitpunkt sich an einem Punkt dieses Bereiches befindet.

Es erfolgt ferner das Ausführen einer dritten Kollisionsprüfung, falls bei der zweiten Kollisionsprüfung festgestellt wurde, dass kein Objekt aus der Umgebung des Fahrzeuges innerhalb der Teilfläche liegt. Wurde bei der zweiten Kollisionsprüfung bereits festgestellt, dass ein Objekt aus der Umgebung des Fahrzeuges innerhalb der Teilfläche liegt, so kann das Ausführen der dritten Kollisionsprüfung übersprungen werden, da bereits erkannt wurde, dass es zu einer Kollision kommt. Bei dem Ausführen der dritten Kollisionsprüfung wird basierend auf der Kontur des Fahrzeuges geprüft, ob es zu einer Kollision zwischen dem Fahrzeug und einem Objekt kommt, wenn das Fahrzeug sich entlang des Abschnittes bewegt. Es werden somit bei der dritten Kollisionsprüfung erstmalig Details aus der Kontur des Fahrzeuges berücksichtigt. Dabei kann bevorzugt auf eine konvexe Kontur des Fahrzeuges zurückgegriffen werden, welche eine Annäherung an eine tatsächliche Kontur des Fahrzeuges ist. So werden beispielsweise explizit alle Punkte berechnet, die von irgendeinem Punkt des Fahrzeuges überstrichen werden, wenn dieses sich entlang des Abschnittes der Bewegungsbahn bewegt. Dazu wird insbesondere auf ein Fahrzeugmodell zurückgegriffen, welches die Außenkontur des Fahrzeuges beschreibt. Optional werden dabei die Bereiche, welche durch die Teilfläche bereits definiert sind, nicht weiter berücksichtigt.

Erfindungsgemäß wird somit ein Verfahren gemäß Anspruch 1 und eine Vorrichtung gemäß Anspruch 10 zur Kollisionserkennung für ein Fahrzeug offenbart, wobei ein gesamter Schweif (swath) des Fahrzeuges kontinuierlich auf Kollision überprüft wird. Dabei entfällt die Notwendigkeit zur Diskretisierung des Pfades, also der Bewegungsbahn, und der wiederholten diskreten Überprüfung einzelner Konfigurationen auf Kollision. Es wird somit ein Verfahren geschaffen, welches eine besonders geringe Rechenzeit und besonders geringe Rechenressourcen benötigt. Bei einem RRT kann damit eine Rechengeschwindigkeit nahezu verdoppelt werden.

Die Unteransprüche zeigen bevorzugte Weiterbildungen der Erfindung.

Es ist vorteilhaft, wenn bei dem Ausführen der ersten Kollisionsprüfung die erste geometrische Form als ein Ringsegment gewählt wird, falls der Abschnitt der Bewegungsbahn eine Kurve beschreibt. Ein Ringsegment ist eine einfach zu definierende geometrische Fläche. Somit kann die erste Kollisionsprüfung basierend auf einfachen mathematischen Gleichungen ausgeführt werden. Gleichzeitig wird durch das Ringsegment in dem Falle, dass die Bewegungsbahn eine Kurve beschreibt, eine gute Annäherung an einen solchen Bereich geschaffen, in dem tatsächlich eine Kollision zwischen dem Fahrzeug und einem Objekt erfolgen würde. Somit wird eine Wahrscheinlichkeit, dass bei der ersten Kollisionsprüfung festgestellt wird, dass ein Objekt aus der Umgebung des Fahrzeuges innerhalb der einhüllenden Fläche liegt, besonders gering gehalten. Somit wird vermieden, dass die zweite Kollisionsprüfung und die dritte Kollisionsprüfung unnötig ausgeführt werden. Es wird somit ein besonders effizientes Verfahren geschaffen.

Auch ist es vorteilhaft, wenn bei dem Ausführen der ersten Kollisionsprüfung die erste geometrische Form als ein Rechteck gewählt wird, falls der Abschnitt der Bewegungsbahn eine Gerade beschreibt. Ein Rechteck ist eine einfach zu definierende geometrische Fläche. Somit kann die erste Kollisionsprüfung basierend auf einfachen mathematischen Gleichungen ausgeführt werden. Gleichzeitig wird durch das Rechteck in dem Falle, dass die Bewegungsbahn eine Kurve beschreibt, eine gute Annäherung an einen solchen Bereich geschaffen, in dem tatsächlich eine Kollision zwischen dem Fahrzeug und einem Objekt erfolgen würde. Somit wird eine Wahrscheinlichkeit, dass bei der ersten Kollisionsprüfung festgestellt wird, dass ein Objekt aus der Umgebung des Fahrzeuges innerhalb der einhüllenden Fläche liegt, besonders gering gehalten. Somit wird vermieden, dass die zweite Kollisionsprüfung und die dritte Kollisionsprüfung unnötig ausgeführt werden. Es wird somit ein besonders effizientes Verfahren geschaffen.

Auch ist es vorteilhaft, wenn bei dem Ausführen der zweiten Kollisionsprüfung die zweite geometrische Form als ein Ringsegment gewählt wird, falls der Abschnitt der Bewegungsbahn eine Kurve beschreibt. Das Ringsegment ist eine einfach mathematisch zu beschreibende Form. Gleichzeitig wird durch das Ringsegment eine gute Annäherung an die Fläche geschaffen, welche tatsächlich von dem Fahrzeug, insbesondere bei Volllenkeinschlag, bei dem Befahren des Abschnittes überstrichen wird. Es wird somit eine Wahrscheinlichkeit gering gehalten, dass bei der zweiten Kollisionsprüfung festgestellt wird, dass kein Objekt aus der Umgebung des Fahrzeuges innerhalb der Teilfläche liegt, obwohl ein Objekt so gelegen ist, dass es zu einer Kollision mit dem Fahrzeug kommt, wenn dieses den Abschnitt befährt. Es wird somit vermieden, dass die dritte Kollisionsprüfung unnötig ausgeführt wird.

Ferner ist es vorteilhaft, wenn bei dem Ausführen der zweiten Kollisionsprüfung die zweite geometrische Form als ein Rechteck gewählt wird, falls der Abschnitt der Bewegungsbahn eine Gerade beschreibt. Das Rechteck ist eine einfach mathematisch zu beschreibende Form. Gleichzeitig wird durch das Rechteck eine gute Annäherung an die Fläche geschaffen, welche tatsächlich von dem Fahrzeug bei dem Befahren des Abschnittes überstrichen wird. Es wird somit eine Wahrscheinlichkeit gering gehalten, dass bei der zweiten Kollisionsprüfung festgestellt wird, dass kein Objekt aus der Umgebung des Fahrzeuges innerhalb der Teilfläche liegt, obwohl ein Objekt so gelegen ist, dass es zu einer Kollision mit dem Fahrzeug kommt, wenn dieses den Abschnitt befährt. Es wird somit vermieden, dass die dritte Kollisionsprüfung unnötig ausgeführt wird.

Auch ist es vorteilhaft, wenn bei dem Ausführen der zweiten Kollisionsprüfung geprüft wird, ob ein Objekt in einer von mehreren der einhüllenden Fläche zugehörigen Teilflächen liegt, wobei jede der mehreren Teilflächen jeweils einen Teilbereich der einhüllenden Fläche definiert und eine vorgegebene zweite geometrische Form aufweist, die jeweils innerhalb der einhüllenden Fläche angeordnet ist, wobei jeder Punkt der mehreren Teilflächen von dem Fahrzeug bei einem Befahren des Abschnittes der Bewegungsbahn überstrichen wird. Auf diese Weise kann durch mehrere einfache geometrische Formen eine Annäherung an eine Fläche geschaffen werden, welche tatsächlich von dem Fahrzeug bei dem Befahren des Abschnittes überstrichen wird. Die Wahrscheinlichkeit, dass bei der zweiten Kollisionsprüfung bereits korrekt erkannt wird, ob es zu einer Kollision zwischen dem Fahrzeug und einem Objekt kommt, wird somit erhöht.

Ferner ist es vorteilhaft, wenn die zweite geometrische Form für die mehreren Teilflächen zumindest in ihrer Grundform, bevorzugt auch in ihrer Dimension, identisch ist. Zwei Teilflächen sind dann in ihrer Grundform identisch, wenn eine der Teilflächen sich mittels einer Skalierung entlang einer oder zweier Achsen in die andere Teilfläche umwandeln lässt. Mit der Dimension wird eine Größe der Teilflächen bezeichnet, insbesondere auch eine durch ein Flächenmaß der Teilflächen beschriebene Größe. Es kann somit für die zweite Kollisionsprüfung auf identische Formeln zurückgegriffen werden, wodurch ein besonders schnelles Berechnen bei der zweiten Kollisionsprüfung ermöglicht wird.

Auch ist es vorteilhaft, wenn die Bewegungsbahn aus mehreren Abschnitten zusammengesetzt ist. So kann durch eine Kombination unterschiedlicher Abschnitte eine komplexe Bewegungsbahn dargestellt werden. Es erfolgt somit eine Kollisionserkennung für komplexe Bewegungsbahnen, wobei ein Rechenaufwand gering gehalten wird.

Erfindungsgemäß wird zunächst die erste Kollisionsprüfung, dann die zweite Kollisionsprüfung und dann die dritte Kollisionsprüfung für alle der näheren Abschnitte ausgeführt, bis bei einer der zweiten oder dritten Kollisionsprüfung eine Kollision erkannt wird. Dabei werden die zweiten und dritten Kollisionsprüfungen in Reaktion darauf ausgeführt, dass bei keiner der ersten Kollisionsprüfungen eine Kollision erkannt wurde. So wird zunächst die erste Kollisionsprüfung für alle Abschnitte der Bewegungsbahn ausgeführt. Wird keine Kollision erkannt, so wird die zweite Kollisionsprüfung für die Abschnitte durchgeführt. Wird dabei bereits eine Kollision erkannt, so kann auf die dritte Kollisionsprüfung bzw. die übrigen zweiten Kollisionsprüfungen verzichtet werden. Wurden alle zweiten Kollisionsprüfungen ausgeführt ohne dass eine Kollision erkannt wurde, so werden die dritten Kollisionsprüfungen ausgeführt.

Sobald eine Kollision erkannt wird, wird auf die übrigen dritten Kollisionsprüfungen verzichtet. Es wird somit ein besonders schneller Algorithmus zum Prüfen einer Bewegungsbahn hinsichtlich einer Kollision geschaffen.

Die erfindungsgemäße Vorrichtung weist alle Vorteile des erfindungsgemäßen Verfahrens auf.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: eine Darstellung eines Ablaufdiagramms des erfindungsgemäßen Verfahrens gemäß einer ersten Ausführungsform,
- Figur 2: eine beispielhafte Darstellung von Flächenbereichen, die bei einer erfindungsgemäßen Kollisionserkennung für einen kurvenförmigen Abschnitt der Bewegungsbahn betrachtet werden,
- Figur 3: eine beispielhafte Darstellung von Flächenbereichen, die bei einer erfindungsgemäßen Kollisionserkennung für einen geraden Abschnitt der Bewegungsbahn betrachtet werden, und
- Figur 4: eine Darstellung eines Fahrzeuges, welches die erfindungsgemäße Vorrichtung umfasst.

### Ausführungsformen der Erfindung

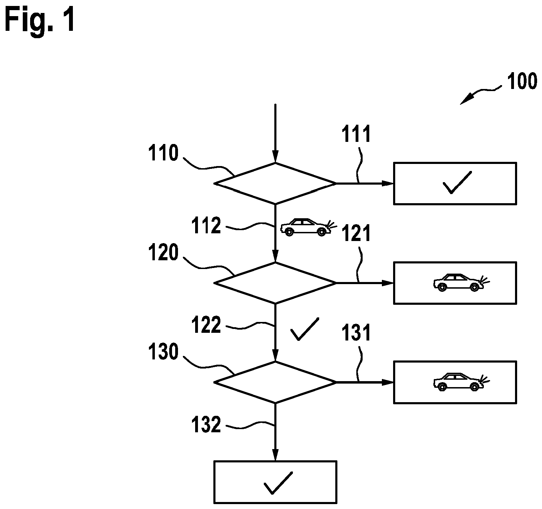

Figur 1 zeigt ein Ablaufdiagramm 100, durch welches das erfindungsgemäße Verfahren zur Kollisionserkennung für ein Fahrzeug 2 in einer ersten Ausführungsform der Erfindung dargestellt ist. Das Verfahren ist in dieser ersten Ausführungsform ein dreistufiges Verfahren, in dem ein Ausführen einer ersten Kollisionsprüfung 110, ein Ausführen einer zweiten Kollisionsprüfung 120 und ein Ausführen einer dritten Kollisionsprüfung 130 erfolgt.

Bei dem Verfahren handelt es sich um eine stufenweise Kollisionserkennung. Das bedeutet, dass unter bestimmten Umständen eine Kollision bereits nach dem Ausführen der ersten Kollisionsprüfung 110 ausgeschlossen werden kann. Ferner kann nach dem Ausführen der zweiten Kollisionsprüfung 120 eine Kollision bereits sicher festgestellt werden, falls das Objekt, mit dem die Kollision erfolgt, entsprechend gegenüber der Bewegungsbahn angeordnet ist. Nur in solchen Fällen, bei denen die erste Kollisionsprüfung 110 und die zweite Kollisionsprüfung 120 zu keinem sicheren Ergebnis führt, erfolgt das Ausführen der dritten Kollisionsprüfung 130, bei welcher Grenzfälle überprüft werden.

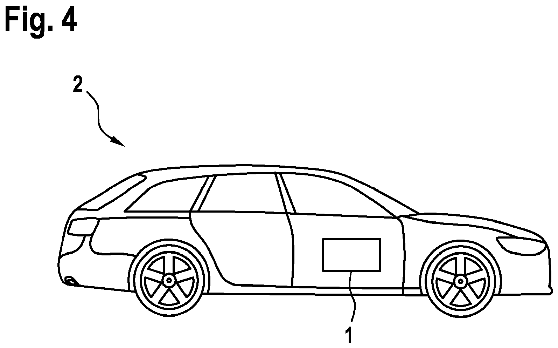

Das Verfahren beginnt mit dem Ausführen der ersten Kollisionsprüfung 110. Das Verfahren wird von einer Vorrichtung 1 ausgeführt, welche in dem Fahrzeug 2 angeordnet ist. Ein solches Fahrzeug 2 mit der erfindungsgemäßen Vorrichtung 1 ist beispielhaft in Figur 4 dargestellt.

Bei der ersten Kollisionsprüfung 110 wird geprüft, ob ein Objekt aus der Umgebung des Fahrzeuges 2 innerhalb einer einhüllenden Fläche 10 liegt, wobei die einhüllende Fläche 10 sich entlang eines Abschnittes 11 einer Bewegungsbahn des Fahrzeuges 2 erstreckt, wobei die einhüllende Fläche 10 eine vorgegebene erste geometrische Form aufweist, welche so gewählt wird, dass das Fahrzeug 2 bei einem Befahren des Abschnittes 11 der Bewegungsbahn innerhalb der einhüllenden Fläche 10 bleibt.

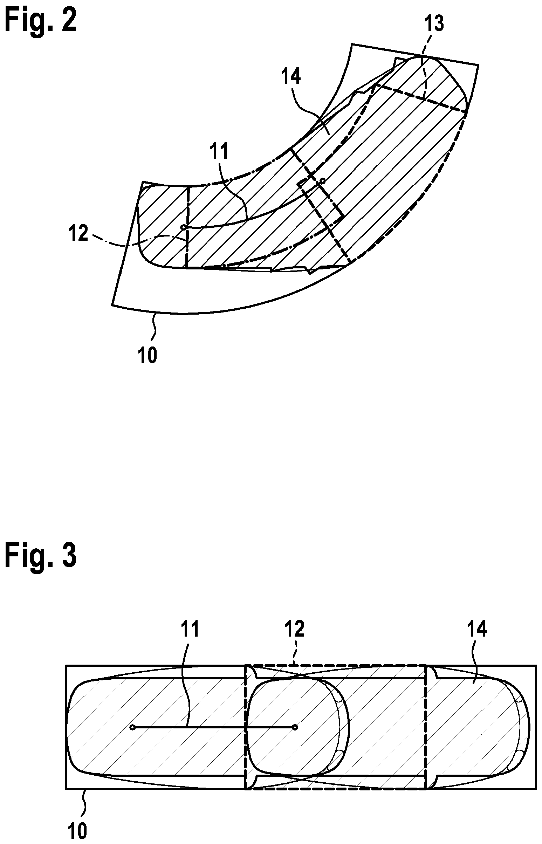

Es wird Bezug auf Figur 2 genommen, in welcher der Abschnitt 11 der Bewegungsbahn beispielhaft als eine Kurve mit einem konstanten Radius gewählt ist. Das bedeutet, dass ein vordefinierter Punkt des Fahrzeuges 2 sich entlang dem Abschnitt 11 bewegen würde, wenn das Fahrzeug 2 entlang der Bewegungsbahn bewegt wird. In Reaktion darauf, dass der Abschnitt 11 der Bewegungsbahn eine Kurve mit konstantem Radius ist, wurde die erste geometrische Form als ein Ringsegment gewählt. Dabei haben das Ringsegment und der kurvenförmige Abschnitt 11 der Bewegungsbahn um einen selben Mittelpunkt. In dem in Figur 2 dargestellten Beispiel wird bei dem Ausführen der ersten Kollisionsprüfung 110 die erste geometrische Form der einhüllenden Fläche 10 somit als ein Ringsegment gewählt, da der Abschnitt 11 der Bewegungsbahn eine Kurve beschreibt.

Bei dem in Figur 2 gestellten Beispiel wird das Fahrzeug 2 von rechts nach links entlang des kurvenförmigen Abschnittes 11 der Bewegungsbahn bewegt. Dabei überstreicht das Fahrzeug 2 wechselnde Punkte in der Umgebung des Fahrzeugs 2. Die Summe aller Punkte, die von dem Fahrzeug 2 überstrichen werden, wenn dieses sich über den Abschnitt 11 bewegt, wird hier als Hüllfläche 14 bezeichnet und ist ebenfalls in Figur 2 dargestellt. Dies bedeutet, dass jedes Objekt, welches sich innerhalb der Hüllfläche 14 befindet, zu einer Kollision mit dem Fahrzeug 2 führen würde, wenn dieses den kurvenförmigen Abschnitt 11 der Bewegungsbahn befährt. Die erste geometrische Form ist so gewählt, dass die Hüllfläche 14 vollständig innerhalb der einhüllenden Fläche 10 liegt.

Bei dem in Figur 2 dargestellten Beispiel wird somit bei der ersten Kollisionsprüfung 110 geprüft, ob ein Objekt innerhalb der einhüllenden Fläche 10 liegt, welche die Form eines Ringsegmentes aufweist. Es ist aus Figur 2 ebenfalls ersichtlich, dass in dem Ringsegment, also innerhalb der einhüllenden Fläche 10, auch solche Bereiche vorliegen, die nicht von dem Fahrzeug 2 überstrichen werden, wenn dieses sich entlang dem Abschnitt 11 bewegt. Somit ist eine Fläche der einhüllenden Fläche 10 größer als eine Fläche der Hüllfläche 14. Es kann somit zu einer Situation kommen, in der ein Objekt innerhalb der einhüllenden Fläche 10 liegt, es jedoch trotzdem nicht zu einer Kollision mit dem Fahrzeug 2 kommt.

Bei der ersten Kollisionsprüfung 110 wird geprüft, ob ein Objekt aus der Umgebung des Fahrzeuges 2 innerhalb der einhüllenden Fläche 10 liegt. Wird festgestellt, dass kein Objekt innerhalb der einhüllenden Fläche 10 liegt, so kann es unter keinem Umstand zu einer Kollision zwischen dem Fahrzeug 2 und einem Objekt kommen, wenn das Fahrzeug 2 den Abschnitt 11 befährt. In diesem Falle wird das erfindungsgemäße Verfahren beendet und es wird als Ergebnis ausgegeben, dass es zu keiner Kollision des Fahrzeuges 2 mit einem Objekt kommt, wenn das Fahrzeug den Abschnitt 11 befährt. Dies ist mit dem Zweig 111 in Figur 1 dargestellt. Der Bestätigungshaken ist dabei so zu verstehen, dass keine Kollision für den Abschnitt 11 zu erwarten ist.

Wird jedoch erkannt, dass sich ein Objekt innerhalb der einhüllenden Fläche 10 befindet, so kann nicht ausgeschlossen werden, dass es zu einer Kollision zwischen dem Fahrzeug und dem Objekt kommt. In der Folge ist eine weitere Prüfung notwendig und es wird daher die zweite Kollisionsprüfung 120 ausgeführt. Dies ist durch den Zweig 112 in Figur 1 gezeigt.

Bei der zweiten Kollisionsprüfung 120, welche immer dann ausgeführt wird, wenn bei der ersten Kollisionsprüfung 110 festgestellt wurde, dass ein Objekt aus der Umgebung des Fahrzeuges 2 innerhalb der einhüllenden Fläche 10 liegt, wird geprüft, ob ein Objekt in einer der einhüllenden Fläche 10 zugehörigen Teilfläche 12 liegt. Die zugehörige Teilfläche 12 definiert einen Teilbereich der einhüllenden Fläche 10 und weist eine vorgegebene zweite geometrische Form auf, welche so gewählt und innerhalb der einhüllenden Fläche 10 angeordnet ist, dass jeder Punkt der Teilfläche 12 von dem Fahrzeug 2 bei einem Befahren des Abschnittes 11 der Bewegungsbahn überstrichen wird. Die Teilfläche 12 liegt somit vollständig innerhalb der Hüllfläche 14.

In Figur 2 ist eine erste zugehörige Teilfläche 12 und eine zweite zugehörige Teilfläche 13 dargestellt. Beide der zugehörigen Teilflächen 12, 13 liegen innerhalb der Hüllfläche 14. In Reaktion darauf, dass der Abschnitt 11 der Bewegungsbahn in dem in Figur 2 gezeigten Beispiel eine Kurve beschreibt, wurde die zweite geometrische Form der ersten und der zweiten Teilfläche 12, 13 als ein Ringsegment gewählt. Die erste und die zweite Teilfläche 12, 13 weisen somit eine identische Grundform auf. Dabei ist die zweite Teilfläche 13 jedoch größer als die erste Teilfläche 12, weshalb diese sich in ihrer Dimension unterscheiden.

Da die Teilflächen 12, 13 vollständig innerhalb der Hüllfläche 14 liegen, kann davon ausgegangen werden, dass es sicher zu einer Kollision zwischen dem Fahrzeug 2 und einem Objekt kommt, falls sich ein Objekt innerhalb der Teilflächen 12, 13 befindet.

Da die Teilflächen 12, 13 innerhalb der Hüllfläche 14 liegen, liegen diese ebenfalls innerhalb der einhüllenden Fläche 10. Jede der Teilflächen 12, 13 bildet somit einen Teilbereich der einhüllenden Fläche 10. Da die Teilflächen 12, 13 vollständig innerhalb der ersten Hüllfläche 14 liegen, ist auch sichergestellt, dass jeder der Punkte der Teilflächen 12, 13 von dem Fahrzeug 2 bei einem Befahren des Abschnittes 11 der Bewegungsbahn überstrichen wird.

Wird festgestellt, dass ein Objekt innerhalb einer der Teilflächen 12, 13 liegt, so kann davon ausgegangen werden, dass es sicher zu einer Kollision zwischen dem Fahrzeug 2 und dem Objekt kommt, wenn das Fahrzeug 2 entlang des Abschnittes 11 der Bewegungsbahn bewegt wird. Es kann somit als Ergebnis der Kollisionserkennung ausgegeben werden, dass eine Kollision vorliegt. Dies ist mit dem Zweig 121 in Figur 1 dargestellt. Ein Objekt kann jedoch auch so gelegen sein, dass dieses außerhalb der Teilflächen 12, 13 liegt, jedoch innerhalb der Hüllfläche 14. In diesem Falle würde es zu einer Kollision zwischen dem Fahrzeug 2 und dem Objekt kommen, wenn das Fahrzeug den Abschnitt 11 der Bewegungsbahn befährt. Das Objekt könnte jedoch auch außerhalb der Hüllfläche 14 aber innerhalb der einhüllenden Fläche 10 liegen, was dazu führen würde, dass es zu keiner Kollision zwischen dem Fahrzeug 2 und dem Objekt kommt. Daher wird die dritte Kollisionsprüfung 130 ausgeführt, falls bei der zweiten Kollisionsprüfung 120 festgestellt wurde, dass kein Objekt aus der Umgebung des Fahrzeuges 2 innerhalb der Teilfläche 12 liegt. Dies ist durch den Zweig 122 in Figur 1 dargestellt.

Bei der dritten Kollisionsprüfung 130 wird geprüft, ob ein Objekt auf solchen Punkten der Hilfsfläche 14 innerhalb der einhüllenden Flächen 10 liegt, welche von dem Fahrzeug 2 bei einem Befahren des Abschnittes der Bewegungsbahn überstrichen werden. Es wird daher ein Algorithmus ausgeführt, welcher basierend auf einem Fahrzeugmodell ermittelt, ob es zwischen dem Fahrzeug 2 und einem Objekt zu einer Kollision kommt, wenn das Fahrzeug entlang des Abschnittes 11 bewegt wird. Hierzu kann auf bekannte Algorithmen zurückgegriffen werden, bei denen die Hüllfläche 14 exakt berechnet wird. Als Beispiel für einen solchen Algorithmus wird auf das Verfahren zum Berechnen einer Distanz zwischen komplexen Objekten im dreidimensionalen Raum von Gilbert, Johnson und Keerthi verwiesen, welcher auch als GJK bezeichnet wird. Der bei der dritten Kollisionsprüfung 130 ausgeführte Algorithmus ist in dieser ersten Ausführungsform so gewählt, dass dieser auch eigenständig die Kollisionserkennung ausführen könnte. Jedoch wird dieser aufwendige Algorithmus nur dann ausgeführt, wenn die erste Kollisionsprüfung 110 und die zweite Kollisionsprüfung 120 zu einem entsprechenden Ergebnis geführt hat. Das bedeutet, dass der aufwendige Algorithmus nicht immer ausgeführt wird, wodurch das Verfahren zur Kollisionserkennung deutlich beschleunigt wird.

Wie auch beispielhaft in Figur 2 dargestellt, bedeutet das Ausführen der dritten Kollisionsprüfung 130, dass exakt geprüft wird, ob das Objekt sich innerhalb der Hüllfläche 14 befindet. Bei einer solchen Prüfung kann optional auch darauf verzichtet werden, die Teilflächen 12, 13 erneut auf eine Kollision zu prüfen. Es wird somit optional nur geprüft, ob das Objekt in einem Bereich der Hüllfläche 14 liegt, welcher außerhalb der Teilflächen 12, 13 liegt. Befindet sich ein Objekt innerhalb der Hüllfläche 14, so wird festgestellt, dass eine Kollision vorliegt. Dies ist durch den Zweig 131 in Figur 1 dargestellt. Befindet sich kein Objekt innerhalb der Hüllfläche 14, so wird festgestellt, dass es zu keiner Kollision kommt. Dies ist durch den Zweig 132 in Figur 1 dargestellt.

Bei dem in Figur 2 dargestellten Beispiel bewegt sich das Fahrzeug 2 mit konstantem Lenkwinkel nach links und startet mit einem Heading Angle von 0°. Mit der Hüllfläche 14 ist der tatsächliche Schweif einer Fahrzeugkontur des Fahrzeuges 2 bei diesem Manöver dargestellt (inkl. den Rädern und des Spiegels). Wie weiter in Figur 2 ersichtlich ist, können große Teile des Schweifs durch sogenannte "Donut Arcs", zuvor als Ringsegmente bezeichnet, abgedeckt werden, welche die Teilflächen 12, 13 bilden. Der Vorteil von Donut Arcs besteht darin, dass Kollisionen mit anderen Objekten einfach und sehr schnell überprüft werden können (Punkt in Donut Arc bzw. Linie schneidet Donut Arc).

In dem zuvor beschriebenen Beispiel wurde davon ausgegangen, dass der Abschnitt 11 der Bewegungsbahn eine Kurve mit konstantem Radius ist. Mit Hinblick auf Figur 3 wird dargestellt, dass der Abschnitt 11 der Bewegungsbahn auch eine Gerade sein kann. Da sich eine Bewegungsbahn typischerweise aus Geraden und Kurven zusammensetzt, wird in dieser ersten Ausführungsform in Reaktion darauf, dass der Abschnitt 11 der Bewegungsbahn eine Gerade beschreibt, die erste geometrische Form der einhüllenden Fläche 10 als ein Rechteck gewählt. Entsprechend wird bei dem Ausführen der ersten Kollisionsprüfung 110 geprüft, ob ein Objekt sich innerhalb des in Figur 3 gezeigten äußeren Rechtecks und somit innerhalb der einhüllenden Fläche 10 befindet. Ist dies nicht der Fall, so wird festgestellt, dass für den betrachteten geradenförmigen Abschnitt 11 keine Kollision vorliegt. Wird festgestellt, dass ein Objekt sich innerhalb der einhüllenden Fläche 10 befindet, so wird bei der zweiten Kollisionsprüfung 120 geprüft, ob ein Objekt innerhalb der Teilfläche 12 liegt. Die Teilfläche 12 weist die zweite geometrische Form auf, welche in Reaktion darauf, dass der Abschnitt 11 der Bewegungsbahn eine Gerade beschreibt, als Rechteck gewählt wurde. Befindet sich das Objekt innerhalb der Teilfläche 12, so wird eine Kollision festgestellt. Befindet sich das Objekt nicht innerhalb der Teilfläche 12, so wird die dritte Kollisionsprüfung 130 ausgeführt. Die dritte Kollisionsprüfung 130 entspricht der Kollisionsprüfung, welche auch bei dem kurvenförmigen Abschnitt 11 ausgeführt wurde und es wird geprüft, ob sich ein Objekt innerhalb der Hüllfläche 14 befindet, wobei die dritte Kollisionsprüfung 130 optional nur für die Bereiche der Hüllfläche 14 erfolgt, welche außerhalb der Teilfläche 12 liegen.

Die erste bis dritte Kollisionsprüfung 110, 120, 130 wird somit für geradenförmige Abschnitte 11 und kurvenförmige Abschnitte 11 in entsprechender Weise ausgeführt, wobei jedoch die geometrischen Formen der einhüllenden Fläche 10 und der einen oder mehreren Teilflächen 12, 13 unterschiedlich gewählt werden.

Es ist ersichtlich, dass das Ausführen der ersten bis dritten Kollisionsprüfungen 110, 120, 130 für jeden Abschnitt einer Bewegungsbahn erfolgen muss. Dabei ist es vorteilhaft, wenn die erste Kollisionsprüfung 110 zunächst für alle der Abschnitte 11 der Bewegungsbahn ausgeführt wird. Wird dabei für keinen der Abschnitte 11 eine mögliche Kollision festgestellt, liegt also kein Objekt in einer der einhüllenden Flächen 10, die sich für die einzelnen Abschnitte 11 ergeben, so kann davon ausgegangen werden, dass es auf der gesamten Bewegungsbahn sicher zu keiner Kollision kommt und das Verfahren kann beendet werden, da sicher keine Kollision für die Bewegungsbahn vorliegt.

Kann für einen oder mehreren der Abschnitte 11 auf der Bewegungsbahn nicht ausgeschlossen werden, dass es zu einer Kollision kommt, da das Objekt innerhalb der einhüllenden Fläche 10 liegt, so wird die zweite Kollisionsprüfung 120 die Abschnitte 11 der Bewegungsbahn ausgeführt. Wird dabei eine Kollision festgestellt, so wird das Verfahren beendet, da sicher eine Kollision für die Bewegungsbahn vorliegt. Dabei ist es nicht notwendig die zweite Kollisionsprüfung 120 alle Abschnitte 11 der Bewegungsbahn auszuführen, wenn eine Kollision erkannt wird, bevor die zweite Kollisionsprüfung 120 für alle Abschnitte 11 ausgeführt wurde.

Wird bei der zweiten Kollisionsprüfung 120 keine Kollision festgestellt, so wird die dritte Kollisionsprüfung 130 für die Abschnitte 11 der Bewegungsbahn ausgeführt, bis entweder eine Kollision festgestellt wird oder alle der Abschnitte 11 durch die dritte Kollisionsprüfung 130 geprüft wurden und dabei keine Kollision festgestellt wurde.

Das erfindungsgemäße Verfahren stellt somit einen kontinuierlichen Kollisionscheck dar, welcher bei einer Kurve im Wesentlichen wie folgt abläuft:
1. Nehme den einhüllenden Donut Arc um den gesamten Schweif, also die einhüllende Fläche 10, und überprüfe, ob der Donut Arc kollisionsfrei ist. Falls kollisionsfrei, continue, andernfalls:
2. Überprüfe ob die inneren Donut Arcs, also die Teilflächen 12, 13, mit einem Objekt im Umfeld in Kollision sind, falls ja -> Kollision gefunden, andernfalls:
3. Überprüfe mit einem diskreten Kollisionschecker, beispielsweise dem GJK, ob die konvexe Hülle um die Anfangskonfiguration und die Endkonfiguration in Kollision sind. Falls ja -> Kollision gefunden, andernfalls:
4. Überprüfe mit dem diskreten Kollisionschecker, ob die konvexe Hülle um die herausstehenden Räder in der Anfangs- und Endkonfiguration in Kollision sind. Falls ja, Kollision gefunden, andernfalls keine Kollision.

Der konturgenaue Schweif eines Fahrzeugs bei der Bewegung auf einer Geraden sieht folgendermaßen aus:
1. Überprüfe die einhüllende Box, also die einhüllende Fläche 10, mit dem diskreten Kollisionschecker auf Kollision. Falls kollisionsfrei, continue, andernfalls:
2. Überprüfe Teilfläche 12 in der Mitte des Schweifs mit dem diskreten Kollisionschecker auf Kollision, falls kollisionsfrei, gehe zu 3., sonst Kollision.
3. Überprüfe die Anfangskonfiguration und die Endkonfiguration mit dem diskreten Kollisionschecker auf Kollision, falls kollisionsfrei -> Schweif kollidiert nicht.

Nebst oben stehender Offenbarung wird explizit auf die Offenbarung der Figuren 1 bis 4 verwiesen.

## Patentansprüche

1. Verfahren (100) zur Kollisionserkennung für ein Fahrzeug (2) welches von einer Vorrichtung zur Kollisionserkennung ausgeführt wird, welche in dem Fahrzeug angeordnet ist, das Verfahren umfassend:
• Ausführen,mit einer Recheneinheit, einer ersten Kollisionsprüfung (110), wobei geprüft wird, ob eir Objekt aus einer Umgebung des Fahrzeuges (2) innerhalb einer einhüllenden Fläche (10) liegt, wobei die einhüllende Fläche (10) sich entlang eines Abschnittes (11) einer Bewegungsbahn des Fahrzeuges (2) erstreckt, wobei die Bewegungsbahn durch einen Planungsalgorithmus bereitgestellt wird, wobei die einhüllende Fläche (10) eine vorgegebene erste geometrische Form aufweist, welche so gewählt wird, dass das Fahrzeug (2) bei einem Befahren des Abschnittes (11) der Bewegungsbahn innerhalb der einhüllenden Fläche (10) bleibt, **gekennzeichnet durch**:
• Ausführen , mit der Recheneinheit, einer zweiten Kollisionsprüfung (120), falls bei der erster Kollisionsprüfung (110) festgestellt wurde, dass das Objekt aus der Umgebung des Fahrzeuges (2) innerhalb der einhüllenden Fläche (10) liegt, wobei bei der zweiten Kollisionsprüfung (120) geprüft wird, ob das Objekt in einer der einhüllenden Fläche (10) zugehörigen Teilfläche (12) liegt, welche einen Teilbereich der einhüllenden Fläche (10) definiert und eine vorgegebene zweite geometrische Form aufweist, welche so gewählt und innerhalb der einhüllenden Fläche (10) angeordnet ist, dass jeder Punkt der Teilfläche (12) innerhalb einer Hüllfläche (14) liegt, welche von dem Fahrzeug (2) bei einem Befahren des Abschnittes (11) der Bewegungsbahn überstrichen wird, wobei die Teilfläche (12) vollständig innerhalb der Hüllfläche (14) liegt, und
• Ausführen , mit der Recheneinheit, einer dritten Kollisionsprüfung (130), falls bei der zweiter Kollisionsprüfung (120) festgestellt wurde, dass kein Objekt aus der Umgebung des Fahrzeuges (2) innerhalb der Teilfläche (12) liegt, wobei geprüft wird, ob das Objekt sich innerhalb der Hüllfläche (14) befindet und somit auf solchen Punkten innerhalb der einhüllenden Fläche (10) liegt, welche von dem Fahrzeug (2) bei einem Befahren des Abschnittes (11) der Bewegungsbahn überstrichen werden, wobei ein Algorithmus ausgeführt, welcher basierend auf einem Fahrzeugmodell des Fahrzeugs (2) ermittelt, ob es zwischen dem Fahrzeug (2) und dem Objekt zu einer Kollision kommt, wenn das Fahrzeug (2) entlang des Abschnittes (11) bewegt wird,
• wobei das Ausführen der zweiten Kollisionsprüfung und das Ausführen der dritten Kollisionsprüfung übersprungen wird, falls bei der ersten Kollisionsprüfung festgestellt wurde, dass kein Objekt aus der Umgebung des Fahrzeuges innerhalb der einhüllenden Fläche liegt, und
• das Ausführen der dritten Kollisionsprüfung übersprungen wird, falls bei der zweiten Kollisionsprüfung festgestellt wurde, dass ein Objekt aus der Umgebung des Fahrzeuges innerhalb der Teilfläche liegt.

2. Verfahren gemäß Anspruch 1, **dadurch gekennzeichnet, dass** bei dem Ausführen der ersten Kollisionsprüfung (110) die erste geometrische Form als ein Ringsegment gewählt wird, falls der Abschnitt (11) der Bewegungsbahn eine Kurve beschreibt.

3. Verfahren gemäß einem der voranstehenden Ansprüche, **dadurch gekennzeichnet, dass** bei dem Ausführen der ersten Kollisionsprüfung (110) die erste geometrische Form als ein Rechteck gewählt wird, falls der Abschnitt (11) der Bewegungsbahn eine Gerade beschreibt.

4. Verfahren gemäß einem der voranstehenden Ansprüche, **dadurch gekennzeichnet, dass** bei dem Ausführen der zweiten Kollisionsprüfung (120) die zweite geometrische Form als ein Ringsegment gewählt wird, falls der Abschnitt (11) der Bewegungsbahn eine Kurve beschreibt.

5. Verfahren gemäß einem der voranstehenden Ansprüche, **dadurch gekennzeichnet, dass** bei dem Ausführen der zweiten Kollisionsprüfung (120) die zweite geometrische Form als ein Rechteck gewählt wird, falls der Abschnitt (11) der Bewegungsbahn ein Gerade beschreibt.

6. Verfahren gemäß einem der voranstehenden Ansprüche, **dadurch gekennzeichnet, dass** bei dem Ausführen der zweiten Kollisionsprüfung (120) geprüft wird, ob ein Objekt in einer von mehreren der einhüllenden Fläche (10) zugehörigen Teilflächen (12; 13) liegt, wobei jede der mehreren Teilflächen (12; 13) jeweils einen Teilbereich der einhüllenden Fläche (10) definiert und eine vorgegebene zweite geometrische Form aufweist, die jeweils innerhalb der einhüllenden Fläche (10) angeordnet ist, wobei jeder Punkt der mehreren Teilflächen (12; 13) von dem Fahrzeug (2) bei einem Befahren des Abschnittes (11) der Bewegungsbahn überstrichen wird.

7. Verfahren gemäß Anspruch 1, **dadurch gekennzeichnet, dass** die zweite geometrische Form für die mehreren Teilflächen (12; 13) zumindest in Ihrer Grundform, bevorzugt auch in ihrer Dimension, identisch ist.

8. Verfahren gemäß einem der voranstehenden Ansprüche, **dadurch gekennzeichnet, dass** die Bewegungsbahn aus mehreren Abschnitten (11, 12) zusammengesetzt ist.

9. Verfahren gemäß Anspruch 8, **dadurch gekennzeichnet, dass** zunächst die erste Kollisionsprüfung (110), dann die zweite Kollisionsprüfung (120) und dann die dritte Kollisionsprüfung (130) für alle der mehreren Abschnitte (11; 12) ausgeführt wird, bis bei einer der zweiten oder dritten Kollisionsprüfungen (120, 130) eine Kollision erkannt wird.

10. Vorrichtung (1), welche in einem Fahrzeug (2) angeordnet ist und welche dazu eingerichtet ist, das Verfahren (100) gemäß einem der voranstehenden Ansprüche auszuführen.

## Claims

1. Method (100) for detecting collisions for a vehicle (2), which is executed by a device for detecting collisions, which is arranged in the vehicle, the method comprising:
• executing a first collision check (110) by using a computing unit, wherein a check is made as to whether an object from a surrounding area of the vehicle (2) is located within an enveloping area (10), wherein the enveloping area (10) extends along a section (11) of a movement path of the vehicle (2), wherein the movement path is provided by a planning algorithm, wherein the enveloping area (10) has a predefined first geometric shape which is chosen such that the vehicle (2) remains within the enveloping area (10) when driving on the section (11) of the movement path,
**characterized by**:
• executing a second collision check (120) by using the computing unit if, during the first collision check (110), it was established that the object from the surrounding area of the vehicle (2) is located within the enveloping area (10), wherein, during the second collision check (120), a check is made as to whether the object is located in a partial area (12) belonging to the enveloping area (10), which defines a subarea of the enveloping area (10) and has a predefined second geometric shape which is chosen and arranged within the enveloping area (10) such that each point of the partial area (12) is located within an enveloping surface (14) which is traversed by the vehicle (2) when driving on the section (11) of the movement path, wherein the partial area (12) is located completely within the enveloping surface (14), and
• executing a third collision check (130) by using the computing unit if, during the second collision check (120), it was established that no object from the surrounding area of the vehicle (2) is located within the partial area (12), wherein a check is made as to whether the object is located within the enveloping surface (14) and is thus located at those points within the enveloping area (10) which are traversed by the vehicle (2) when driving on the section (11) of the movement path, wherein an algorithm is executed which, on the basis of a vehicle model of the vehicle (2), determines whether a collision between the vehicle (2) and the object will occur if the vehicle (2) is moved along the section (11),
• wherein the execution of the second collision check and the execution of the third collision check are skipped if, during the first collision check, it was established that no object from the surrounding area of the vehicle is located within the enveloping area, and
• the execution of the third collision check is skipped if, during the second collision check, it was established that an object from the surrounding area of the vehicle is located within the partial area.

2. Method according to Claim 1, **characterized in that** during the execution of the first collision check (110), the first geometric shape is chosen as a ring segment if the section (11) of the movement path describes a curve.

3. Method according to either of the preceding claims, **characterized in that** during the execution of the first collision check (110), the first geometric shape is chosen as a rectangle if the section (11) of the movement path describes a straight line.

4. Method according to one of the preceding claims, **characterized in that** during the execution of the second collision check (120), the second geometric shape is chosen as a ring segment if the section (11) of the movement path describes a curve.

5. Method according to one of the preceding claims, **characterized in that** during the execution of the second collision check (120), the second geometric shape is chosen as a rectangle if the section (11) of the movement path describes a straight line.

6. Method according to one of the preceding claims, **characterized in that** during the execution of the second collision check (120), a check is made as to whether an object is located in one of a plurality of partial areas (12; 13) belonging to the enveloping area (10), wherein each of the plurality of partial areas (12; 13) respectively defines a subarea of the enveloping area (10) and has a predefined second geometric shape which, in each case, is arranged within the enveloping area (10), wherein each point of the plurality of partial areas (12; 13) is traversed by the vehicle (2) when driving on the section (11) of the movement path.

7. Method according to Claim 1, **characterized in that** the second geometric shape for the plurality of partial areas (12; 13) is identical, at least in terms of their outline, preferably also in terms of their dimension.

8. Method according to one of the preceding claims, **characterized in that** the movement path is composed of a plurality of sections (11, 12).

9. Method according to Claim 8, **characterized in that** the first collision check (110) is executed first, then the second collision check (120) and then the third collision check (130) for all of the plurality of sections (11; 12) until a collision is detected during either of the second and third collision checks (120, 130) .

10. Device (1) which is arranged in a vehicle (2) and which is set up to carry out the method (100) according to one of the preceding claims.

## Revendications

1. Procédé (100) de détection de collision pour un véhicule (2), qui est exécuté par un dispositif de détection de collision qui est disposé dans le véhicule, le procédé comprenant :
• l'exécution, à l'aide d'une unité de calcul, d'un premier contrôle de collision (110), dans lequel on contrôle si un objet d'un environnement du véhicule (2) se situe à l'intérieur d'une surface enveloppante (10), la surface enveloppante (10) s'étendant le long d'un segment (11) d'une trajectoire du véhicule (2), la trajectoire étant fournie par un algorithme de planification, la surface enveloppante (10) présentant une première forme géométrique prédéfinie qui est sélectionnée de telle sorte que le véhicule (2) reste à l'intérieur de la surface enveloppante (10) lorsqu'il parcourt le segment (11) de la trajectoire,
**caractérisé par** :
• l'exécution, à l'aide de l'unité de calcul, d'un deuxième contrôle de collision (120) s'il a été constaté lors du premier contrôle de collision (110) que l'objet de l'environnement du véhicule (2) est situé à l'intérieur de la surface enveloppante (10), dans lequel, lors du deuxième contrôle de collision (120), on contrôle si l'objet est situé dans une surface partielle (12) appartenant à la surface enveloppante (10) et qui définit une zone partielle de la surface enveloppante (10) et présente une deuxième forme géométrique prédéfinie qui est sélectionnée et disposée à l'intérieur de la surface enveloppante (10) de telle sorte que chaque point de la surface partielle (12) est situé à l'intérieur d'une surface enveloppante (14) qui est balayée par le véhicule (2) lorsqu'il parcourt le segment (11) de la trajectoire, la surface partielle (12) étant située entièrement à l'intérieur de la surface enveloppante (14), et
• l'exécution, à l'aide de l'unité de calcul, d'un troisième contrôle de collision (130) s'il a été constaté lors du deuxième contrôle de collision (120) qu'aucun objet de l'environnement du véhicule (2) n'est situé à l'intérieur de la surface partielle (12), dans lequel on contrôle si l'objet se trouve à l'intérieur de la surface enveloppante (14) et est donc situé à des points à l'intérieur de la surface enveloppante (10) qui sont balayés par le véhicule (2) lorsqu'il parcourt le segment (11) de la trajectoire, dans lequel un algorithme est exécuté qui établit sur la base d'un modèle de véhicule du véhicule (2) si une collision surviendra entre le véhicule (2) et l'objet si le véhicule (2) est déplacé le long du segment (11),
• l'exécution du deuxième contrôle de collision et l'exécution du troisième contrôle de collision étant ignorées si lors du premier contrôle de collision il a été constaté qu'aucun objet de l'environnement du véhicule n'est situé à l'intérieur de la surface enveloppante, et
• l'exécution du troisième contrôle de collision est ignorée si lors du deuxième contrôle de collision il a été constaté qu'un objet de l'environnement du véhicule est situé à l'intérieur de la surface partielle.

2. Procédé selon la revendication 1, **caractérisé en ce que** lors de l'exécution du premier contrôle de collision (110), la première forme géométrique est sélectionnée sous la forme d'un segment d'anneau si le segment (11) de la trajectoire décrit une courbe.

3. Procédé selon l'une quelconque des revendications précédentes, **caractérisé en ce que** lors de l'exécution du premier contrôle de collision (110), la première forme géométrique est sélectionnée sous la forme d'un rectangle si le segment (11) de la trajectoire décrit une droite.

4. Procédé selon l'une quelconque des revendications précédentes, **caractérisé en ce que** lors de l'exécution du deuxième contrôle de collision (120), la deuxième forme géométrique est sélectionnée sous la forme d'un segment d'anneau si le segment (11) de la trajectoire décrit une courbe.

5. Procédé selon l'une quelconque des revendications précédentes, **caractérisé en ce que** lors de l'exécution du deuxième contrôle de collision (120), la deuxième forme géométrique est sélectionnée sous la forme d'un rectangle si le segment (11) de la trajectoire décrit une droite.

6. Procédé selon l'une quelconque des revendications précédentes, **caractérisé en ce que** lors de l'exécution du deuxième contrôle de collision (120), on contrôle si un objet est situé dans l'une de plusieurs surfaces partielles (12 ; 13) appartenant à la surface enveloppante (10), chacune des plusieurs surfaces partielles (12 ; 13) définissant respectivement une zone partielle de la surface enveloppante (10) et présentant une deuxième forme géométrique prédéfinie qui est disposée respectivement à l'intérieur de la surface enveloppante (10), chaque point des plusieurs surfaces partielles (12 ; 13) étant balayé par le véhicule (2) lorsqu'il parcourt le segment (11) de la trajectoire.

7. Procédé selon la revendication 1, **caractérisé en ce que** la deuxième forme géométrique pour les plusieurs surfaces partielles (12 ; 13) est identique au moins par sa forme de base, de préférence aussi par sa dimension.

8. Procédé selon l'une quelconque des revendications précédentes, **caractérisé en ce que** la trajectoire est composée de plusieurs segments (11, 12).

9. Procédé selon la revendication 8, **caractérisé en ce que** d'abord le premier contrôle de collision (110), ensuite le deuxième contrôle de collision (120) et ensuite le troisième contrôle de collision (130) sont exécutés pour l'ensemble des plusieurs segments (11 ; 12) jusqu'à ce qu'une collision ait été détectée lors d'un du deuxième ou du troisième contrôle de collision (120, 130).

10. Dispositif (1) qui est disposé dans un véhicule (2) et qui est agencé pour exécuter le procédé (100) selon l'une quelconque des revendications précédentes.
